## Europäisches Patentamt
## European Patent Office
## Office européen des brevets

(11) Veröffentlichungsnummer: **0 061 048**
**B1**

(12) **EUROPÄISCHE PATENTSCHRIFT**

(45) Veröffentlichungstag der Patentschrift:
08.05.85

(21) Anmeldenummer: 82101790.2

(22) Anmeldetag: 06.03.82

(51) Int. Cl.⁴: **A 47 L 25/00**, C 09 J 7/02,
**B 05 C 1/08**

(54) Kleiderreinigungsrolle, Verfahren zu ihrer Herstellung und Vorrichtung zur Durchführung des Verfahrens.

(30) Priorität: 21.03.81 DE 3111150

(43) Veröffentlichungstag der Anmeldung:
29.09.82 Patentblatt 82/39

(45) Bekanntmachung des Hinweises auf die Patenterteilung:
08.05.85 Patentblatt 85/19

(84) Benannte Vertragsstaaten:
AT BE IT NL SE

(56) Entgegenhaltungen:
DE - A - 2 110 491
DE - A - 2 909 276
DE - B - 1 628 637
DE - C - 855 746
FR - A - 2 044 078
GB - A - 1 115 609
US - A - 2 329 179
US - A - 2 624 060
US - A - 2 911 756
US - A - 3 343 194

(73) Patentinhaber: Gebrauchs Geräte GmbH,
Kapellenstrasse 49 Postfach 11 25,
D-6239 Kriftel/Taunus (DE)

(72) Erfinder: Wolfrum, Emil, Rebenstrasse 7,
D-8550 Forchheim (DE)

(74) Vertreter: Knoblauch, Ulrich, Dr.-Ing.,
Kühhornshofweg 10, D-6000 Frankfurt am Main 1 (DE)

BUNDESDRUCKEREI BERLIN

## Beschreibung

Die Erfindung bezieht sich auf eine Kleiderreinigungsrolle mit einem durchgehend nur auf der Außenseite mit einem Klebstoff beschichteten Band, das in vorbestimmten Längsabständen quer zur Bandlängsrichtung verlaufende, durch Bandschwächung gebildete Trennlinien aufweist, sowie auf ein Verfahren zur Herstellung einer Kleiderreinigungsrolle und auf eine Vorrichtung zur Durchführung des Verfahrens.

Bei bekannten (im Handel erhältlichen) Kleiderreinigungsrollen dieser Art tritt die Schwierigkeit auf, nach dem Abreißen eines Klebebandabschnitts längs einer Trennlinie, die zumeist durch eine entsprechende Perforation vorgegeben ist, das wieder am Bandwickel festgeklebte äußere Bandende zu lösen, um einen weiteren Bandabschnitt abzureißen. Dies ist besonders schwierig bei Klebebändern, deren Trägerband aus Kreppapier oder einer sehr dünnen Folie besteht. Dem Benutzer wird dann zumeist in der Bedienungsanleitung empfohlen, das äußere Bandende über die gesamte Bandbreite oder nur an einer Ecke um ein kurzes Stück umzuknicken, so daß sich ein leichter erfaßbares Ende ergibt. Abgesehen davon, daß Bedienungsanleitungen häufig nicht befolgt werden, bedeutet ihr Aufdruck und ihre Befolgung einen zusätzlichen Aufwand. Darüber hinaus ist das leichte Erfassen des Bandendes nach dem Umknicken auch dann noch nicht sichergestellt, wenn es sich um eine Kleiderreinigungsrolle handelt, bei der die mit Klebstoff beschichtete Seite radial nach außen liegt, so daß das Umknicken nach außen erfolgen muß und das Bandende bis zur Knickkante dennoch am darunterliegenden Bandabschnitt festklebt.

Sodann sind Kleiderreinigungsrollen der US-A-2 624 060, US-A-3 343 194 (= GB-A-1 115 609) und der FR-A-2 044 078 zu entnehmen, wobei die Außenseite des Klebebandes der Kleiderreinigungsrolle gemäß US-A-3 343 194 oder FR-A-2 044 078 nicht durchgehend mit Klebstoff beschichtet ist. Vielmehr sind bei US-A-3 343 194 Längsrandbereiche auf der Außenseite des Bandes nicht mit Klebstoff versehen oder durch Beschichtung nichtklebend ausgebildet. Entsprechendes gilt für FR-A-2 044 078, bei der Bereiche durch Auftragen von Firnis oder eines den Klebstoff neutralisierenden Mittels nichtklebend ausgebildet sind. Nach US-A-2 624 060 ist das Band zwar durchgehend auf der Außenseite mit Klebstoff beschichtet. Dagegen fehlen durch Bandschwächung gebildete Trennlinien. Vielmehr sind dort von vornherein vollständig getrennte Bandabschnitte auf dem Wickelkörper aufgewickelt. Sodann ist bei der Kleiderreinigungsrolle nach US-A-2 624 060 die Innenseite des Bandes durchgehend mit Wachs beschichtet.

Die DE-A-2 909 276 zeigt keine Kleiderreinigungsrolle, sondern lediglich eine Klebebandrolle, die auf der Innenseite mit Klebstoff beschichtet ist. Ferner ist die Klebstoffschicht in der Umgebung der Trennlinien unterbrochen, so daß sich klebstofffreie Bereiche ergeben, an denen Klebstoff gegebenenfalls haften würde. Dies gilt auch für die US-A-2 911 756, nur daß dort noch zusätzlich die Innenseite des Klebebandes durch eine nichtklebende Folie abgedeckt ist, die bei Benutzung des Klebebandes abgezogen werden muß.

Der Vorschlag nach DE-C-8 55 746, eine Siliconschicht nicht die ganze Rückseite des Trägermaterials bedecken zu lassen, sondern nur streifen- oder rasterartig aufzutragen, läßt nicht erkennen, daß dies gezielt im Zusammenhang damit zu sehen ist, das Erfassen des äußeren Bandes (an der Abreißstelle) zu erleichtern.

Der Erfindung liegt die Aufgabe zugrunde, eine Klebebandrolle der gattungsgemäßen Art anzugeben, bei der das Erfassen des äußeren Bandendes ohne zusätzliche Maßnahmen des Benutzers erleichtert ist. Ferner sollen ein einfaches Herstellungsverfahren und eine einfache Vorrichtung zur Durchführung des Verfahrens angegeben werden.

Erfindungsgemäß ist die gattungsgemäße Kleiderreinigungsrolle in der Weise ausgebildet, daß auf der inneren Bandseite zu beiden Seiten jeder Trennungslinie unmittelbar an diese angrenzend jeweils eine nicht klebende Schicht aus einem Klebstoff abweisenden Material aufgebracht ist, deren Erstreckung in Bandlängsrichtung kleiner als ein Drittel des Längsabstands benachbarter Trennlinien ist.

Im Vergleich zu der gattungsgemäßen im Handel erhältlichen Kleiderreinigungsrolle haftet bei der erfindungsgemäßen Lösung der an die Trennlinie angrenzende Randbereich, der die Schicht aus klebstoffabweisendem Material aufweist, nicht an der ihm zugekehrten Außenseite der darunterliegenden Bandwindung, so daß der Randbereich leicht mit der Hand erfaßt werden kann, um einen weiteren Längsabschnitt des Bandes von der Rolle zu lösen und abzureißen. Dennoch bleibt die Kleiderreinigungsrolle über die gesamte Länge und Breite aller durch die Trennlinien begrenzten Bandlängsabschnitte in der gewünschten Weise klebfähig. Eine Bedienungsanweisung hinsichtlich der Ausbildung eines leichter lösbaren Randabschnitts entfällt.

Die klebstofffreien Schichten sich jeweils zu beiden Seiten der Trennlinien in Bandlängsrichtung erstrecken zu lassen, ist insofern vorteilhaft, als sich beim Abreißen eines Abschnitts an den nichtperforierten Stellen der Trennlinie Fransen ergeben, die über das Bandende hinausragen und — wenn sie nicht mit der klebstoffabweisenden Schicht überzogen wären — an der darunterliegenden Windung des Bandes festkleben würden. Zwar ließe sich das Bandende im Bereich von als Schlitze ausgebildeten Perforationen erfassen, doch bestünde die Gefahr, daß das Band beim Abziehen der seitlichen Enden der Perforationen einreißt, insbesondere wenn es sich um ein leicht zerreißbares Kreppapier handelt, wie es bei Kleiderreinigungsrollen üblicherweise verwendet wird. Die beiden jeweils an einer Trennlinie angrenzenden Schichten bilden daher praktisch jeweils eine zusammenhängende Schicht, die in einem Arbeitsgang aufgebracht werden kann und darüber hinaus sicherstellt, daß das klebstoffabweisende Material nach dem Abreißen eines Bandlängsabschnitts unmittelbar an der Kante angrenzt.

Im Vergleich zu der aus der US-A-2 624 060 bekannten Kleiderreinigungsrolle kann die erfindungsgemäße Kleiderreinigungsrolle leichter hergestellt werden, da es sich bei dem Klebeband um ein endloses Band handelt, während die Bandlängsabschnitte bei der bekannten Kleiderreinigungsrolle durchgehend getrennt sind. Die durchgehende Wachsschicht auf der Innenseite des Klebebandes der bekannten Kleiderreinigungsrolle hat sodann den Nachteil, daß sich die einzelnen Bandlängsabschnitte bereits bei der Benutzung der Rolle lösen. Außerdem ist ihr Materialaufwand im Vergleich zu einer unterbrochenen Schicht größer.

Bei der aus der US-A-3 343 194 bekannten Kleiderreinigungsrolle bleibt ein erheblicher Teil der verfügbaren Fläche auf der Außenseite des Bandes, wegen der klebstofffreien Randbereiche, ungenutzt. Sodann ist eine Bedienungsanleitung erforderlich, die den Benutzer darauf hinweist, an welche Stelle er mit dem Lösen eines Bandlängsabschnitts zu beginnen hat. In der Regel werden derartige Bedienungsanweisungen nicht beachtet. Beginnt der Benutzer mit dem Lösen eines Bandlängsabschnitts auf der falschen Seite, dann besteht die Gefahr, daß der Bandlängsabschnitt am Rande einreißt und nur teilweise entfernt wird. Dies erfordert gegebenenfalls wiederholte Versuche, um einen Bandlängsabschnitt abzuziehen. Selbst wenn es gelungen sein sollte, einen Bandlängsabschnitt bis zur nächsten Trennlinie zu lösen, muß wegen der gekrümmten Form der Trennlinien noch der nächste Bandlängsabschnitt teilweise gelöst werden, um den ersten Bandlängsabschnitt an der Trennlinie abreißen zu können. Anschließend muß dann der nächste Bandlängsabschnitt wieder angeklebt werden. Alle diese Nachteile entfallen bei der neuen Kleiderreinigungsrolle.

Bei der aus der FR-A-2 044 078 bekannten Kleiderreinigungsrolle stehen die nichtklebenden Bereiche auf der mit Klebstoff beschichteten Außenseite des Bandes ebenfalls nicht zur Aufnahme von Fusseln und dergleichen zur Verfügung. Ferner müßte sichergestellt sein, daß der klebstofffreie Bereich der einen Windung den klebstofffreien Bereich der folgenden Windung genau im Bereich der Trennlinie überlappt. Dies läßt sich in der Praxis aber kaum realisieren, wenn man die Streifen nicht unverhältnismäßig lang in Umfangsrichtung ausbilden wollte. Denn die Abstände der Trennlinien sollten in der Praxis so gewählt sein, daß sie dem kleinsten und dem größten Umfang des Bandwickels möglichst nahekommen, um einerseits beim Abreißen eines Abschnitts nicht mehr Papier als verschmutzt ist, andererseits aber auch nicht soviel weniger abzureißen, daß noch ein großer verschmutzter Rest verbliebe. Andererseits möchte man auch verhindern, daß die Trennlinien aufeinanderfolgender Bandwindungen genau in einer radialen Ebene liegen, um sicherzustellen, daß nicht versehentlich zwei übereinanderliegende Bandabschnitte gleichzeitig erfaßt und abgerissen werden. Man wählt daher die Abstände der Trennlinien wesentlich geringer, als es dem maximalen Umfang des Bandwickels entspricht. So sind bei der neuen Kleiderreinigungsrolle die Trennlinienabstände in der Praxis so gewählt, daß die äußere Bandwindung drei Trennlinien aufweist. Dabei hat man es dann in der Hand, bei den ersten Windungen des Bandwickels mehr Abschnitte als bei den letzten aufeinmal abzureißen. Darüber hinaus sind die Abstände bei der neuen Kleiderreinigungsrolle in der Praxis unterschiedlich, d. h. die ungeradzahligen Abschnitte sind untereinander gleich, jedoch größer als die ebenfalls untereinander gleichen geradzahligen Abschnitte, um zu erreichen, daß mit Sicherheit keine Trennlinien übereinanderfallen. Dies zeigt, daß die Abschnitte auf die Umfangslänge des Bandwickels bezogen sehr lang sein müßten, um sicherzustellen, daß sich von Bandwindung zu Bandwindung stets zwei Bereiche über einer Trennlinie überlappen. Dies ergäbe eine erhebliche Verschwendung von Klebstoff bzw. zur Aufnahme von Fusseln verfügbarer Flächen. Darüber hinaus besteht die Gefahr, daß das Band beim Abziehen einreißt, wenn es, wie üblich, aus Kreppapier besteht und sich die Klebstoffabweisenden Bereiche, wie bei der neuen Kleiderreinigungsrolle, nicht über die gesamte Bandbreite erstrecken.

Ein besonders geeignetes Klebstoff abweisendes Material ist wachshaltig. Dieses Material läßt sich leicht verflüssigen und in diesem Zustand auf das Trägerband aufbringen. Es bleibt auch nach dem Aushärten am Trägerband haften, wobei die freie Oberfläche dann (bei Normaltemperatur) nicht mehr klebfähig ist und für den Klebstoff des Bandes abweisend wirkt.

Das erfindungsgemäße Herstellungsverfahren zeichnet sich dadurch aus, daß das Klebstoff abweisende Material zeitlich um wenigstens einen Trennlinienabstand gegenüber der Ausbildung der Trennlinien versetzt auf der inneren, klebstofffreien Bandseite aufgebracht wird, so daß jede Trennlinie etwa in der Mitte einer Schicht aus Klebstoff abweisendem Material liegt. Dies ermöglicht eine kontinuierliche Herstellung von Band und Rolle im gleichen Arbeitsgang.

Die Vorrichtung zur Durchführung eines Verfahrens besteht erfindungsgemäß darin, daß zwischen einer Auftragswalze für flüssiges, aushärtbares, Klebstoff abweisendes Material und einer Messerwalze eine Gegenstempelwalze gelagert ist, so daß sich die Walzenumkreise tangieren, daß das Band von einer Vorratsrolle teilweise um die Gegenstempelwalze herum zu einer Aufwickelrolle geführt ist, und daß die Drehbewegungen von Gegenstempel- und Messerwalze so synchronisiert sind, daß jeder Trennschnitt zur Ausbildung einer Trennlinie weitgehend mit der Mitte der der Messerwalze zugekehrten Gegenstempelstirnfläche zusammenfällt. Diese Vorrichtung ist besonders einfach und erfordert für die Ausbildung der Klebstoff abweisenden Schichten zusätzlich lediglich die Auftragwalze und einen Vorratsbehälter für das Klebstoff abweisende Material, in das die Auftragwalze taucht.

Die Erfindung und ihre Weiterbildungen werden nachstehend anhand der Zeichnung eines bevorzugten Ausführungsbeispiels näher beschrieben. Es zeigen

Fig. 1 eine perspektivische Darstellung einer Kleiderreinigungsvorrichtung mit einer erfindungsgemäßen Kleiderreinigungsrolle, von der zwei Längsabschnitte abgewickelt sind, und

Fig. 2 eine schematische Darstellung eines Verfahrens und einer Vorrichtung zur Herstellung einer erfindungsgemäßen Kleiderreinigungsrolle.

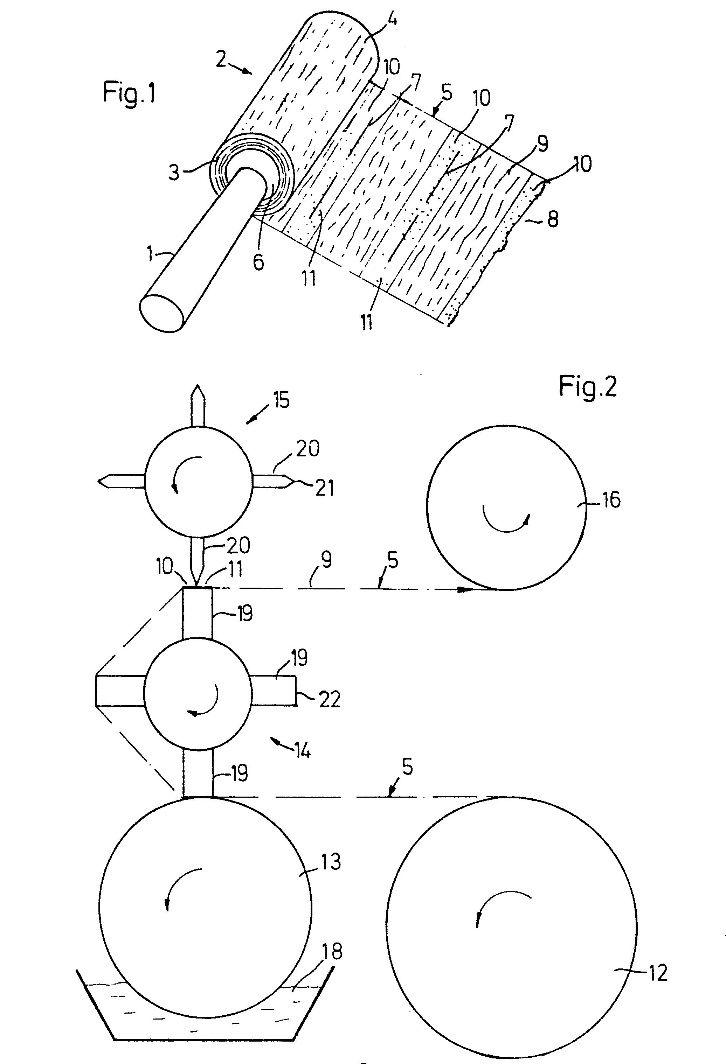

Die in Fig. 1 dargestellte Kleiderreinigungsvorrichtung hat einen leicht konischen Handgriff und eine auf einer axialen Verlängerung des Handgriffs 1 drehbar gelagerte Kleiderreinigungsrolle 2, die einen (nicht dargestellten) hohlzylindrischen Wickelkörper aus steifem Karton und auf diesem einen Klebebandwickel 3 aus einem radial nach außen mit Klebstoff 4 beschichteten Band 5 aus Kreppapier aufweist. Der Wickelkörper ist an seinen Enden von Scheiben 6 eingefaßt, die auf der Achsverlängerung des Handgriffs 1 drehbar gelagert sind und den Wickelkörper tragen.

Das Band 5 ist in vorbestimmten Längsabständen mit durch Bandschwächung — hier Perforationen in Form von Einschnitten — gebildeten Trennlinien 7 versehen, die quer zur Bandlängsrichtung verlaufen und das Abreißen von verbrauchtem Bandmaterial in vorbestimmten Längsabständen erleichtern.

Um das Untergreifen einer Abreißkante 8 nach einer Benutzung der Kleiderreinigungsrolle 2 zum Abwickeln und Abreißen eines benutzten Längsabschnitts zu erleichtern, ist beiderseits jeder Trennlinie 7 auf der nicht mit Klebstoff versehenen inneren Bandseite 9 je eine Schicht 10 und 11 aus Klebstoff 4 abweisendem, nicht klebendem Material, hier Wachs, aufgebracht, wobei die Schichten 10 und 11 einteilig ausgebildet sind, so daß sie unmittelbar an die Trennlinien 7 angrenzen und sich nur über weniger als ein Viertel der Länge eines Bandlängsabschnitts bzw. des Abstands benachbarter Trennlinien 7 in Bandlängsrichtung erstrecken. Im Bereich der Schichten 10 und 11 klebt die Innenseite 9 des Bandes 5 im Wickel 3 daher nicht an der mit Klebstoff 4 beschichteten radial äußeren Bandseite fest, so daß sich die jeweilige Abreißkante 8 leicht (mit dem Finger- oder Daumennagel) untergreifen läßt. Die Schichten 11 können entfallen, erleichtern jedoch das Aufbringen des Klebstoff abweisenden Materials in unmittelbarer Nähe der Trennlinien 7 durch einteilige, zusammenhängende Aufbringung der Schichten 10, 11. Andere geeignete Materialien, die den Klebstoff 4 abweisen, sind beispielsweise mindestens eines der Materialien Stearin, Wachskreide und Silicon.

Fig. 2 zeigt schematisch ein Verfahren und eine Vorrichtung zur Herstellung einer erfindungsgemäßen Kleiderreinigungsrolle gemäß Fig. 1. Sie besteht aus einer Vorratsrolle 12, einer Auftragwalze 13, einer Gegenstempelwalze 14, einer Messerwalze 15 und einer Aufwickelrolle 16. Die Gegenstempelwalze 14 liegt zwischen der Auftragwalze 13 und der Messerwalze 15, so daß ihre Drehachsen in einer Ebene liegen und sich ihre Umkreise tangieren. Die Auftragwalze 13 taucht mit ihrer Unterseite in ein Bad aus Klebstoff abweisendem flüssigem Material 18, das aushärtbar ist, hier Wachs. Die Gegenstempelwalze 14 weist vier in gleichen Winkelabständen radial abstehende Gegenstempel 19 und die Messerwalze 15 radiale Messer 20 in gleichen Winkelabständen wie die Gegenstempel 19 auf. Die Schneidkanten 21 der Messer 20 liegen radial außen. Es sind soviele Messer 20 in Axialrichtung der Messerwalze 15 hintereinander vorgesehen, wie Trennschlitze längs einer Trennlinie 7 ausgebildet werden sollen.

Während des Betriebs der Vorrichtung läuft das Band 5 von der Vorratsrolle 12 teilweise um die Gegenstempelwalze 14 herum zur Aufwickelrolle 16. Dabei liegt es einerseits an den radial äußeren Stirnflächen 22 und andererseits jedesmal dann, wenn ein Gegenstempel 19 der Auftragwalze 13 zugekehrt ist, am Umfang der Auftragwalze 13 an. Dabei wird das Band in vorbestimmten Abständen, die den Längsabständen der Trennlinien 7 entsprechen, mit dem Material 18 benetzt, das eine einteilige Klebstoff 4 abweisende Schicht bildet. Diese Schicht wird dann zeitlich eine halbe Umdrehung der Walzen 14, 15 bzw. zwei Trennlinienabstände später durch ein dann der betreffenden Stirnfläche 22 zugekehrtes Messer 20 gleichzeitig mit dem der Ausbildung einer Trennlinie 7 dienenden Perforieren des Bandes 5 in Schichten 10 und 11 unterteilt, so daß jede Schicht 10, 11 an eine Trennlinie 7 angrenzt, selbst dann, wenn die Trennlinie 7 etwas außerhalb der Mitte der Doppelschicht 10, 11 liegt, also die Schichten in Bandlängsrichtung nicht genau gleich lang sind.

Bei diesem Ausführungsbeispiel ist die Drehzahl beider Walzen 14, 15 gleich. Es ist aber auch möglich, die Anzahl bzw. Winkelabstände der Messe 20 anders als die der Gegenstempel 19 zu wählen, sofern nur die Drehzahlen so gewählt sind, daß jede Gegenstempel 19 von einem Messer 20 getroffen wird. Von der Aufwickelrolle 16 kann das Band 5 dann auf den Wickelkörper der Kleiderreinigungsrolle 2 in der gewünschten Länge umgespult werden, wenn es bereits oder nachdem es noch mit Klebstoff 4 beschichtet worden ist. Stattdessen ist es auch möglich, die Rolle 16 durch den Wickelkörper der Kleiderreinigungsrolle 2 zu ersetzen und das Band, nachdem es mit Klebstoff 4 beschichtet worden ist, unmittelbar auf den Wickelkörper der Kleiderreinigungsrolle 2 aufzuwickeln. Außerdem ist es möglich, die Rollen 16 und 12 zu vertauschen und die durch die Pfeile dargestellten Dreh- bzw. Bandlaufrichtungen umzukehren, so daß zuerst die Trennlinien 7 ausgebildet werden und erst dann das Material 18 aufgetragen wird.

**Patentansprüche**

1. Kleiderreinigungsrolle (2) mit einem durchgehend nur auf der Außenseite mit einem Klebstoff (4) beschichteten Band (5), das in vorbestimmten Längsabständen quer zur Bandlängsrichtung verlaufende, durch Bandschwächung gebildete Trennlinien (7) aufweist, dadurch gekennzeichnet, daß auf der inneren Bandseite (9) zu beiden Seiten jeder Trennlinie (7) unmittelbar an diese angrenzend jeweils eine nicht klebende Schicht (10, 11) aus einem Klebstoff (4) abweisenden Material (18) aufgebracht ist, deren Erstreckung in Bandlängsrichtung kleiner als ein Drittel des Längsabstands benachbarter Trennlinien (7) ist.

2. Kleiderreinigungsrolle nach Anspruch 1, dadurch gekennzeichnet, daß das Klebstoff (4) abweisende Material (18) der beiden Schichten (10, 11) wachshaltig ist.

3. Verfahren zur Herstellung einer Kleiderreinigungsrolle (2) nach Anspruch 1, dadurch gekennzeichnet, daß das Klebstoff (4) abweisende Material (18) zeitlich um wenigstens einen Trennlinienabstand gegenüber der Ausbildung der Trennlinien (7) versetzt auf der inneren, klebstofffreien Bandseite (9) aufgebracht wird, so daß jede Trennlinie (7) etwa in der Mitte einer Schicht (10, 11) aus Klebstoff abweisendem Material (18) liegt.

4. Vorrichtung zur Durchführung des Verfahrens nach Anspruch 3, dadurch gekennzeichnet, daß zwischen einer Auftragswalze (13) für flüssiges, aushärtbares, Klebstoff (4) abweisendes Material (18) und einer Messerwalze (15) eine Gegenstempelwalze (14) gelagert ist, so daß sich die Walzenumkreise tangieren, daß das Band (5) von einer Vorratsrolle (12) teilweise um die Gegenstempelwalze (14) herum zu einer Aufwickelrolle (16) geführt ist, und daß die Drehbewegung von Gegenstempel- und Messerwalze (14, 15) so synchronisiert sind, daß jeder Trennschnitt zur Ausbildung einer Trennlinie (7) weitgehend mit der der Mitte der Messerwalze (15) zugekehrten Gegenstempelstirnfläche (22) zusammenfällt.

**Claims**

1. A reel (2) of adhesive tape for cleaning clothes, which tape (5) is continuously coated only on the outer face with adhesive (4) and which, at predetermined intervals lengthwise, has transverse tear lines (7) formed by weakening of the tape, characterized in that on the inner face of the tape on both sides of each tear line and directly adjoining the tear line, a non-adhesive layer (10, 11) of adhesive repellent material (18) is applied, respectively, the extension of which layer in the longitudinal direction of the tape is less than one third of the spacing between adjacent tear lines.

2. A reel for cleaning clothes according to claim 1, characterized in that the adhesive (4) repellent material (18) of the two layers (10, 11) contains wax.

3. A method of making a reel (2) for cleaning clothes according to claim 1, characterized in that the adhesive (4) repellent material (18) is applied offset in time by at least one pitch of the tear lines as compared with the making of the tear lines (7) onto the inner face (9) of the tape, which face (9) is free of adhesive, so that each tear line (7) lies substantially in the centre of a layer (10, 11) of adhesive-repellent material (18).

4. Apparatus for carrying out the method of claim 3, characterized in that a counterpunch roll (14) is positioned between an applicator roll (13) for applying liquid thermosetting material which is adhesive repellent and a blade roll (15) such that the circumcircles of the rolls are tangent to each other; that the tape (5) is fed from a stock reel (12) partly around the counterpunch roll (14) to a take-up reel (16), and that the rotary motions of the counterpunch roll (14) and the blade roll (15) are so synchronized that each cut for making a tear line (7) coincides with the counterpunch endfase (22) facing the centre of the blade roll (15).

**Revendications**

1. Rouleau pour le nettoyage de vêtements (2) comprenant une bande (5) qui est enduite de manière continue, uniquement sur la face externe, par une substance adhésive (4) et qui présente, à des distances longitudinales prédéterminées, des lignes séparatrices (7) disposées transversalement à la direction longitudinale de la bande et formées par affaiblissement de la bande, caractérisé en ce que, sur la face interne (9) de la bande, une couche non adhésive (10, 11) en une matière (18) repoussant la substance adhésive (4) est chaque fois appliquée des deux côtés de chaque ligne séparatrice (7) d'une manière directement adjacente à celle-ci, l'extension de cette couche dans la diection longitudinale de la bande étant plus petite qu'un tiers de la distance longitudinale entre des lignes séparatrices voisines (7).

2. Rouleau pour le nettoyage de vêtements suivant la revendication 1, caractérisé en ce que la matière (18) repoussant la substance adhésive (4) des deux couches (10, 11) contient de la cire.

3. Procédé de préparation d'un rouleau pour le nettoyage de vêtements (2) suivant la revendication 1, caractérisé en ce que la matière (18) repoussant la substance adhésive (4) est appliquée sur la face interne (9), exempte de substance adhésive, de la bande, en fonction du temps, à une distance au moins égale à celle entre lignes séparatrices, de manière décalée par rapport à la réalisation des lignes séparatrices (7), de façon que chaque ligne séparatrice (7) soit environ au milieu d'une couche (10, 11) de matière (18) repoussant la substance adhésive.

4. Dispositif pour la mise en oeuvre du procédé suivant la revendication 3, caractérisé en ce que, entre un cylindre d'application (13) d'une matière fluide durcissable (18) repoussant la substance adhésive (4) et un cylindre porte-lames (15), un cylindre pourvu de contre-poinçons (14) est supporté de façon que les circonférences des cylindres soient tangentes, que la bande (5) provenant d'un rouleau de réserve (12) soit guidée partiellement autour du cylindre pourvu de condre-poinçons (14) en direction d'un rouleau d'enroulement (16), et que les mouvements de rotation du cylindre pourvu de contre-poinçons (14) et du cylindre porte-lames (15) soient synchronisés de telle sorte que chaque coupe destinée à la réalisation d'une ligne séparatrice (7) coïncide largement avec le milieu de la face frontale (22) du contre-poinçon dirigé vers le cylindre porte-lames (15).

Fig.1

Fig.2